Europäisches Patentamt

European Patent Office

Office européen des brevets

(19)

(11) Publication number: **0 064 122**
**B1**

(12) **EUROPEAN PATENT SPECIFICATION**

(45) Date of publication of patent specification: **26.11.86**

(21) Application number: **81830150.9**

(22) Date of filing: **26.08.81**

(51) Int. Cl.⁴: **H 04 N 17/02**

(54) Digital ITS signal generator usable as a reference standard instrument in systems for producing, transmitting and diffusing color television signals by PAL system.

(30) Priority: **30.04.81 IT 2146681**

(43) Date of publication of application:
**10.11.82 Bulletin 82/45**

(45) Publication of the grant of the patent:
**26.11.86 Bulletin 86/48**

(84) Designated Contracting States:
**DE FR GB**

(56) References cited:
**GB-A-1 455 821**
**US-A-4 215 367**

(73) Proprietor: **RAI RADIOTELEVISIONE ITALIANA**
**Viale Mazzini 14**
**I-00195 Rome (IT)**

(72) Inventor: **D'Amato, Paolo**
**Via Monte Ortigara, 35**
**I-10100 Torino (IT)**
Inventor: **Cerruti, Giovanni**
**Via Mancini, 12**
**I-10100 Torino (IT)**

(74) Representative: **Zini, Alessandro**
**Ufficio Tecnico Internazionale Brevetti Ing.**
**Alessandro Zini Piazza Castello 1**
**I-20121 Milano (IT)**

**EP 0 064 122 B1**

Courier Press, Leamington Spa, England.

## Description

The present invention relates to a digital ITS signal generator usable as a reference standard instrument for producing, transmitting and diffusing television signals by the PAL system.

1. The ITS signals (insertion test signals) are by now currently used for controlling all the television systems (laboratory apparatus, radio links, transmitters, relay stations). Their waveform and insertion lines are specified in the recommandation 473 of CCIR.

2. The apparatuses used for the ITS are: ITS generators, videooscillographs, vectorscopes, automatic meters.

3. None of the mentioned apparatuses can be so constructed as to have so close tolerances and such stability characteristics as to provide a "reference". Therefore, if, by connecting the measuring instruments in a loop, distorsions depending on one or more instruments are found, it is not possible to establish by simple methods which is the instrument originating them.

4. In order to solve this problem it has been devised to provide digital ITS generators which, by containing a minimum amount of analog parts, require no calibration and have such a stability that they can be adopted as "reference standard instrument".

These generators comprise read only memories (ROM), in each of which an ITS signal is stored. The ROMs are read by a clock pulse clamped to the line frequency (typically the clock frequency changes from 12 to 20 MHz) and the signal produced is sent to an analog to digital converter (C.A.D.) and to a low-pass filter.

The precision in the waveform of the signal depends:
—on the bit number per sample (typically 8—10),
—on the precision of the analog to digital converter,
—on the characteristics of the low-pass filter.

It should be noted that the construction of the filter is so much the simpler, the higher is sampling frequency. Anyway, it is possible to balance the distorsions introduced by the filter by pre-distorting the waveforms stored in the ROMs.

5. Unfortunately, in the case of the PAL system, the phase of the colour subcarrier in each of the ITS lines, changes, from one field to the other, by 90°. It is therefore necessary to store in the ROMs 4 different versions of each ITS signal. These are sent segmentally to the C.A.D. according a four fields cycle. The amount of memory required is substantial.

6. In order to reduce this disadvantage it is possible, in an instrument intended to operate exclusively as a calibrator and which therefore is not used to transmit the signals, to renounce to the four fields PAL sequence. In other words, each ITS signal is generated in a single version. On the oscilloscope the color subcarrier of the ITS signals does not move with respect to the line synchronism but appears as "frozen".

If the video synchronism signal is produced by a normal synchronism generator (P.G.) there is no longer an accurate correlation between the phase of the burst (color synchronism) in a predetermined line and the ITV inserted in said line, except a field every four. In the other fields there is a 90°, 180°, 270° error respectively.

7. In order to control videooscilloscopes and vectorscopes it is convenient (or in some cases indispensable) to make use of signals inserted on all the lines. Therefore, it is suitable that the standard ITS generator produces also full-field signals. In this case the phase error of the subcarrier of the signal with respect to the burst changes continuously because of the 25 Hz offset (see formula (2) hereinafter).

8. The phase errors mentioned in paragraphs 6 and 7 do not cause inconveniences in the major part of the instruments. However, they make difficult or impossible the use of the ITS generator for controlling those meters in which the subcarrier is reconstituted by means of a local oscillator clamped to the burst (vectorscopes and some types of automatic differential phase meters). More precisely, in the case of full-field measures the control of the above mentioned instruments is impossible. In the case of field blanking measures the four versions of the signal each produce a luminous trace on the vectorscope screen, but each trace is little bright and undergoes flicker. The differential phase meters cannot operate even in the case of field blanking measures.

It is an object of the invention to provide a digital ITS generator to be used as a reference standard instrument in which the inconveniences mentioned in paragraph 8 are avoided without multiplying by 4 the capacity of the memory.

More particularly, the digital ITS generator according to the invention is characterized in that its pulse generator comprises a synchronism generator (P.G.) in which the subcarrier frequency $f_{sc}$ and the line frequency $f_H$ are bound to each other by the relation:

$$f_{sc} = 284\, f_H$$

As is seen the above specified problem has been solved by means of an artifice and precisely by the provision of an off standard P.G., in which the following relation exists between the subcarrier frequency $f_{sc}$ and the line frequency $f_H$:

$$f_{sc} = \frac{1136}{4}\, f_H = 284\, f_H \qquad (1)$$

instead of the normal relation:

$$f_{sc} = \frac{1135}{4}\, f_H + f_Q \qquad (2)$$

where $f_Q$=field frequency (25 Hz).

Since the automatic meters and the vectorscopes do not tolerate substantial departures of the subcarrier frequency from the rated value, it is necessary to keep the rated value for $f_{sc}$. Therefore, it is the line frequency which is put off standard, but this does not cause any inconvenience inasmuch as any synchronism separator is capable of accepting the modified signal.

By adapting the relation (1) the subcarrier frequency is an integral multiple of the line frequency so that each ITS signal must be generated in a single version. However, the phase errors mentioned in paragraphs 6 and 7 do not occur so that the ITS generator with modified P.G. can be used also for controlling the vectorscopes and the differential phase meters both with ITS and full-field signals.

The invention will be better understood from the following description, given merely by way of example and therefore in no limiting sense, of an embodiment thereof, referring to the accompany drawings in which:

Fig. 1 is a block diagram of a digital ITS generator; and

Fig. 2 is a diagram, also in the block form but more detailed, of the pulse generator being a part of the digital ITS generator of Fig. 1.

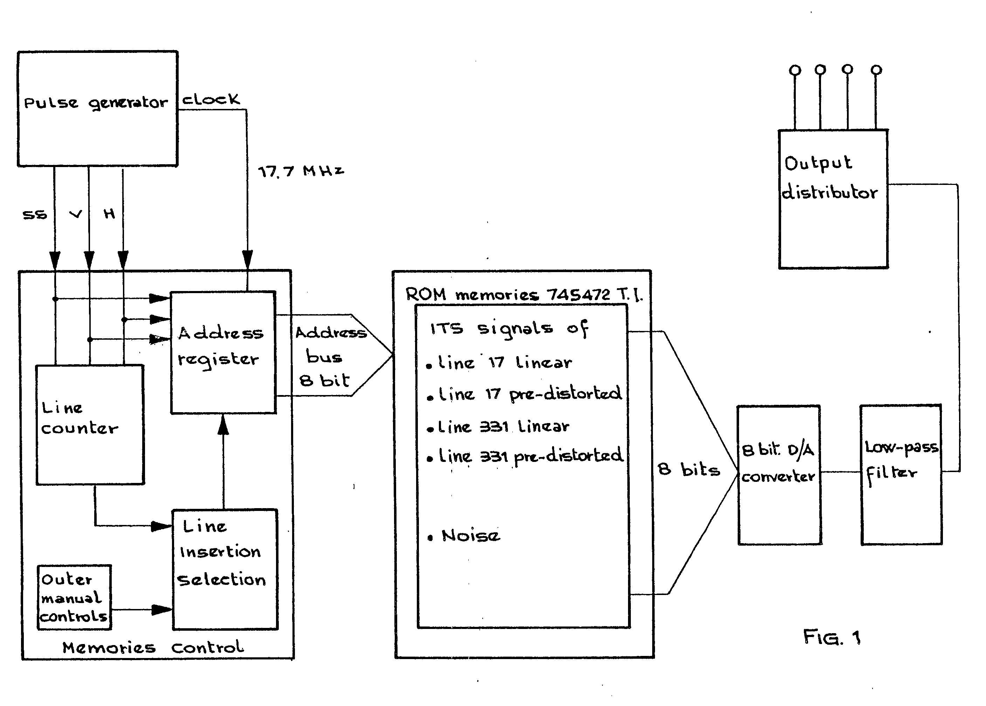

In Fig. 1 there is illustrated, by way of example, one of the circuitry solutions adopted for putting into practice the present invention. Said solution refers to a calibrator provided for meeting the requirements of the RAI and European Broadcasting Union. The apparatus is capable of generating test signals both in the undistorted version and with the addition of distortions of a known amount. It is thus possible to control the operation of the measuring instruments not only in the zero position but also at a definite point of the scale. In order to reduce the costs not all the four ITS signals of the Recommandation 473 of CCIR are generated, but only two of them, i.e. the signal of line 17 with the addition of the stairs subcarrier and the signal of line 331. These signals are those mostly used and make it possible to measure almost all the distorsions of the video signal. In addition, the calibrator produces a "noise" having a known effective value, to be inserted on line 22, which has been assigned by CCIR to the measure of the S/N ratio, and finally a ramp signal for controlling the calibrator (in particular the correct operation of the digital to analog converter). All the above mentioned signals are inserted by the apparatus in the field blanking lines or also on the full field, according to combinations programmable by the operator. The apparatus is fully selfcontained in the sense that it does not require an external video signal on which to synchronize, as is obvious, and produces a signal including synchronisms and burst, in which the various test signals are inserted according to the combination chosen by the operator.

In Fig. 1 the part embodying the principle forming an object of the invention is the pulse generator which produces the clock for the extraction of the data from the memories and the off standard video synchronism signal (see equation (1)).

All the remaining part of the diagram is based on known principles and therefore it will be described briefly.

The signals produced by the pulse generator, i.e. the supersynchron SS, the vertical synchronism V and the horizontal synchronism H are used both for addressing the ROMs, where the test signals including the synchronisms and burst are memorized, and counting the video lines and generate the gates for the insertion of the test signals in the lines the operator has programmed by means of the external manual controls.

The ROMs are of the 74S472 Texas Instruments type and have a capacity of 512 8 bit words. The samples of each test signal could be memorized in two chips.

Since however the read out rate of the ROMs is not sufficient, because of the high clock frequency (17,8 MHz), it is necessary to organize the memory in such a manner that each ROM is read with a frequency equal to a quarter of that of the clock. In practice, the memory is organized in groups of 4 ROMs and in each group 2 test signals are memorized.

Consider f.e. the ROM group which generates the signals A and B. In order to generate the signal A there are read the first sample of the first half of ROM 1, the first sample of the first half of ROM 2, the first sample of the first half of ROM 3, the first sample of the first half of ROM 4, the second sample of the first half of ROM 1, the second sample of the first half of ROM 2, etc. Similarly, in order to generate the signal B the samples stored in the second half of the four ROMs are read with a similar sequence.

As stated above, each sample consists of 8 bits. This solution is somewhat critical for some signals and so it could be convenient to design a generator similar to that described, in which the samples consists of 10 bits.

This would involve, however, a different organization of the memory inasmuch as ROMs organized in 10 bit words are not available on the market.

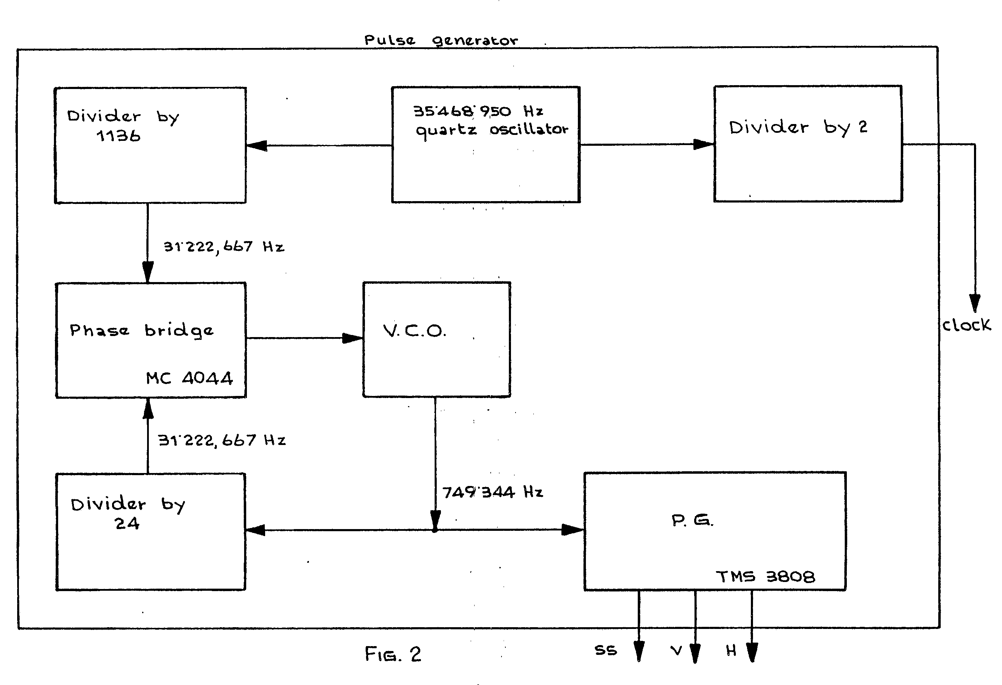

Referring now to Fig. 2, there will be analyzed in greater detail the pulse generator embodying the principle forming an object of the present invention.

In order to use the integrated circuits available on the market an apparently redundant circuit diagram has been used, which however substantially simplifies in practice the design.

From a 35,6 MHz quartz oscillator the 17,8 mhz clock is obtained by means of division by 2. On the other hand, from the same oscillator a 749 kHz is obtained which is necessary to monitor a Texas TMS 3808 integrated circuit which produces directly the signals SS, H and V.

By means of division by 1136 a 2H frequency signal is obtained which is compared in a phase bridge (also provided by means of an integrated circuit available on the market, a Motorola MC 4044) with a 2H signal obtained by dividing by 24 the 749 kHs signal produced by a voltage controlled oscillator (V.C.O.).

The V.C.O. is controlled by the voltage delivered by a phase bridge. In this manner an absolutely stable 749 kHz signal is obtained inasmuch as it is frequency clamped to the 35,5 MHz quartz oscillator.

It is pointed out that the described embodiment (Fig. 2) illustrates but one of the many possible ways to apply the principle forming an object of the invention. The diagram of Fig. 1 also illustrates but one example of generator to which is useful to apply said principle. Generally, while but one embodiment of the invention has been illustrated and described, it is obvious that a number of changes and modifications can be made without departing from the scope of the invention.

## Claims

1. Digital ITS signal generator usable as a reference standard instrument in systems for producing, tramsmitting and diffusing color television signals by the PAL system, comprising 1) a pulse generator, 2) a memories control comprising a line counter, a line insertion selection device and an address register, and 3) ROM memories, the signals generated by the pulse generator being used both for addressing the ROMS and counting the video lines and generating the gating pulses for the insertion of the test signals in the lines which the operator has programmed by means of external manulal controls, characterised in that its pulse generator comprises an off standard synchronism generator (P.G.) in which the subcarrier frequency $f_{sc}$ and the line frequency $f_H$ are bound to each other by the relation:

$$f_{sc}=284\,f_H$$

2. Digital ITS signal generator as claimed in claim 1, characterized in that the pulse generator comprises a divider by 1136 having the input connected to an output of a 35.468.950 Hz oscillator and the output connected to an input of a phase bridge having a second input connected to the output of a divider by 24 and the output connected to the input of an oscillator whose frequency is controlled by means of a voltage change (V.C.O), the latter having the output connected to the input of the divider by 24 and the input ừi the synchronism generator (P.G.).

## Patentansprüche

1. Digitaler Prüfzeilensignalgenerator zur Verwendung als Bezugsnormal instrument bei Anlagen zum Erzeugen, Senden und übertragen von Farbfernsehsignalen nach dem PAL-System, bestehend aus 1) einem Impulsgenerator, 2) einer Speichersteuerung mit einem Zeilenzähler, einer Zeiteinblendungs - Wähleinrichtung und einem Adressenregister, und 3) Festwertspeichern, wobei die vom Impulsgenerater erzeugten Signale sowohl zur Adressierung der Festwertspeicher als auch zum Zählen der Bildschirmzeilen und zur Erzeugung der Einblendimpulse zur Einblendung der Prüfsignale in die jeweils von einer Bedienungsperson mit Hilfe externer manueller Steuerung ausgewählten Zeilen, dadurch gekennzeichnet, daß der Impulsgenerator aus einem Außernorm - Synchronisiergenerator (P.G.) besteht, dessen Hilfsträgerfrequenz fse und Zeilenfrequenz fh in folgendem Verhältnis zueinander stehen:

$$f_{sc}=284\,f_H$$

2. Digitaler Prüfzeilensignalgenerator nach Anspruch 1, dadurch gekennzeichnet, daß der Impulsgenerator einen 1/1136 - Frequenzteiler aufweist, dessen Eingang an den Ausgang eines 35.468.950 Hz-Oszillators und dessen Ausgang an den Eingang eines Brückenmodulators angeschlossen sind, wobei der zweite Eingang des Brückenmodulators mit dem Ausgang eines 1/24 Frequenzteilers und sein Ausgang mit dem Eingang eines spannungsgesteurten Oszillators (V.C.O) verbunden sind, wobei der Ausgang dieses Oszillators an den Eingang des 1/24 - Frequenzteilers und den Eingang des Synchronisiergenerators (P.G.) angeschlossen ist.

## Revendications

1. Générateur digital de signaux ITS, utilisable comme instrument de référence standard dans des systèmes pour produire, transmettre et diffuser des signaux de télévision en couleurs selon le système Pal, comprenant (1) un générateur d'impulsions, (2) un moyen de contrôle de mémoires comportant un compteur de lignes, un dispositif de sélection d'insertion de lignes et un registre d'adresses, et (3) des mémoirs ROM, les signaux générés par le générateur d'impulsions étant utilisés tant soit pour adresser les ROMS que pour compter les lignes video et pour générer les impulsions de déclenchement pour l'insertion des signaux d'éssai dans les lignes que l'opérateur a programmées à l'aide de moyens de contrôle manuels extérieurs, caractérisé par le fait que le générateur d'impulsions comprend un générateur de synchronisme hors standard (PG), dans lequel la fréquence de la sub-porteuse $f_{sc}$ et la fréquence de la ligne $f_H$ sont reliées entr'elles par la relation

$$f_{sc}=284\,f_H$$

2. Générateur digital de signaux ITS, selon la revendication 1, caractérisé en ce que le générateur d'impulsions comprend un diviseur par 1136 ayant l'entrée reliée à une sortie d'un oscillateur de 35.468.950 Hz et la sortie reliée à l'entrée d'un pont à phase ayant une seconde entrée reliée à la sortie d'un diviseur par 24 et la sortie reliée à l'entrée d'un oscillateur dont la fréquence est contrôlée à l'aide d'un modificateur de tension (V.C.O.), ce dernier ayant la sortie reliée à l'entrée du diviseur par 24 et l'entrée du générateur de synchronisme (PG).

FIG. 1

Pulse generator

clock

Divider by 2

35'468'950 Hz quartz oscillator

Divider by 1136

31'222,667 Hz

Phase bridge
MC 4044

V.C.O.

31'222,667 Hz

Divider by 24

749'344 Hz

P.G.
TMS 3808

SS

V

H

Fig. 2